Europäisches Patentamt

European Patent Office

Office européen des brevets

(19)

(11) Veröffentlichungsnummer: **0 391 481**
**A2**

## (12) EUROPÄISCHE PATENTANMELDUNG

(21) Anmeldenummer: **90200781.4**

(22) Anmeldetag: **02.04.90**

(51) Int. Cl.5: **G11B 15/44**

(30) Priorität: **06.04.89 AT 818/89**

(43) Veröffentlichungstag der Anmeldung:
**10.10.90 Patentblatt 90/41**

(84) Benannte Vertragsstaaten:
**AT DE FR GB**

(71) Anmelder: **N.V. Philips' Gloeilampenfabrieken**
**Groenewoudseweg 1**
**NL-5621 BA Eindhoven(NL)**

(72) Erfinder: **Veigl, Johann**
**c/o INT. OCTROOIBUREAU B.V., Prof.**
**Holstlaan 6**
**NL-5656 AA Eindhoven(NL)**

(74) Vertreter: **Van Weele, Paul Johannes Frits et**
**al**
**INTERNATIONAAL OCTROOIBUREAU B.V.**
**Prof. Holstlaan 6**
**NL-5656 AA Eindhoven(NL)**

(54) **Aufzeichnungs- und/oder Wiedergabegerät.**

(57) Bei einem Aufzeichnungs- und/oder Wiedergabegerät (1) mit mindestens einem Servomechanismus (29), der ein von einem Motor (22) antreibbares erstes Zahnrad (30) und ein durch Federkraft mit dem ersten Zahnrad (30) in Eingriff bringbares, mit einem Lager (32) drehbar gelagertes zweites Zahnrad (31) aufweist, sind an dem zweiten Zahnrad (31) zwei bezüglich der Achse (53) desselben diametral angeordnete Angriffsflächen (55, 56) vorgesehen, die beide von einer zum Ineingriffbringen des zweiten Zahnrades (31) mit den ersten Zahnrad (30) vorgesehenen Feder (57) belastet sind. Durch die diametrale Federbelastung wird eine besonders geringe Belastung des Lagers (32) des zweiten Zahnrades (31) und damit eine besnders kleine Lagerreibung in diesem Lager (32) erreicht.

FIG.1

EP 0 391 481 A2

## Aufzeichnungs- und/oder Wiedergabegerät

Die Erfindung bezieht sich auf ein Aufzeichnungs- und/oder Wiedergabegerät mit mindestens einem zum Verstellen mindestens eines Geräteteiles vorgesehenen Servomechanismus, der ein von einem Motor antreibbares erstes Zahnrad und ein mit dem ersten Zahnrad in Eingriff bringbares, mit einem Lager drehbar gelagertes zweites Zahnrad aufweist, von dem her der Geräteteil verstellbar ist und das in seinem Umfangsbereich mindestens einen zahnfreien Abschnitt, der in einer Ruhelage des zweiten Zahnrades, in der dasselbe mit einem zwischen einer Blockierlage und einer Freigabelage verstellbaren Blockierteil blockierbar ist, dem ersten Zahnrad gegenüberliegt, und eine von einer Seitenfläche desselben abstehende, gegenüber der Achse desselben versetzt angeordnete Angriffsfläche aufweist, die in der Ruhelage des zweiten Zahnrades von einer Feder belastet ist, mit der nach einer Verstellung des Blockierteiles aus seiner Blockierlage in seine Freigabelage das zweite Zahnrad zum Ineingriffbringen mit dem ersten Zahnrad in Drehung versetzbar ist.

Ein derartiges Gerät ist beispielsweise aus der DE-OS 34 34 557 bekannt. Bei dem bekannten Gerät greift die als einarmige Biegefeder ausgebildete Feder, die die Angriffsfläche belastet, einseitig an dem zweiten Zahnrad an, wodurch eine einseitige Belastung des Lagers des zweiten Zahnrades auftritt. Eine solche einseitige Belastung des Lagers hat aber eine relativ hohe Lagerreibung zur Folge, was hinsichtlich einer möglichst leichtgängigen Verdrehbarkeit des zweiten Zahnrades, die insbesondere für ein sicheres Ineingriffbringen desselben mit dem ersten Zahnrad mit Hilfe der Feder wichtig ist, und hinsichtlich eines möglichst geringen Verschleisses des Lagers des zweiten Zahnrades ungünstig ist, dies insbesondere dann, wenn das zweite Zahnrad samt seinem Lager aus Kunststoff besteht.

Die Erfindung hat sich zur Aufgabe gestellt, die vorstehend angeführten Schwierigkeiten zu vermeiden und bei einem Gerät der eingangs angeführten Gattung eine möglichst geringe Lagerreibung im Lager des zweiten Zahnrades und damit eine leichtgängige Verdrehbarkeit des zweiten Zahnrades sowie einen geringen Verschleiß des Lagers des zweiten Zahnrades zu erreichen. Hiefür ist die Erfindung dadurch gekennzeichnet, daß das zweite Zahnrad zusätzlich eine von der Seitenfläche desselben abstehende zweite Angriffsfläche aufweist und die beiden Angriffsflächen bezüglich der Achse des zweiten Zahnrades diametral angeordnet sind und daß in der Ruhelage des zweiten Zahnrades die zweite Angriffsfläche ebenfalls von einer Feder belastet ist, mit der nach einer Verstellung des Blockierteiles aus seiner Blockierlage in seine Freigabelage das zweite Zahnrad zum Ineingriffbringen mit dem ersten Zahnrad in Drehung versetzbar ist. Dadurch, daß die Federbelastung nunmehr an den beiden bezüglich der Achse des zweiten Zahnrades diametral gegenüberliegenden Angriffsflächen auftritt, heben sich die an sich auf das Lager ausgeübten Belastungen gegenseitig im wesentlichen auf, so daß praktisch keine Belastung des Lagers auftritt und folglich eine besonders kleine Lagerreibung erreicht wird. Aufgrund dieser kleinen Lagerreibung wird vorteilhafterweise eine leichtgängige Verdrehbarkeit des zweiten Zahnrades, die insbesondere für ein sicheres Ineingriffbringen desselben mit dem ersten Zahnrad mit Hilfe der Feder erforderlich ist, und ein geringer Verschleiß des Lagers des zweiten Zahnrades erhalten.

Jede der beiden Angriffsflächen des zweiten Zahnrades kann beispielsweise von einer separaten Feder belastet sein. Als vorteilhaft hat sich aber erwiesen, wenn die beiden Angriffsflächen von einer einzigen Feder belastet sind. Dies ist im Hinblick auf eine möglichst gleich große Belastung der beiden Angriffsflächen vorteilhaft.

Als Feder kann beispielsweise eine Zugfeder vorgesehen sein, die mit ihren Enden je an einem von zwei Zwischenhebeln eingehängt ist, wobei jeder Zwischenhebel an einer der beiden Angriffsflächen angreift. Als besonders vorteilhaft hat sich aber erwiesen, wenn die Feder durch eine zweiarmige Biegefeder gebildet ist, deren beide Arme unmittelbar an den Angriffsflächen angreifen. Hiedurch wird eine besonders einfache Ausbildung und besonders einfache Montage erreicht.

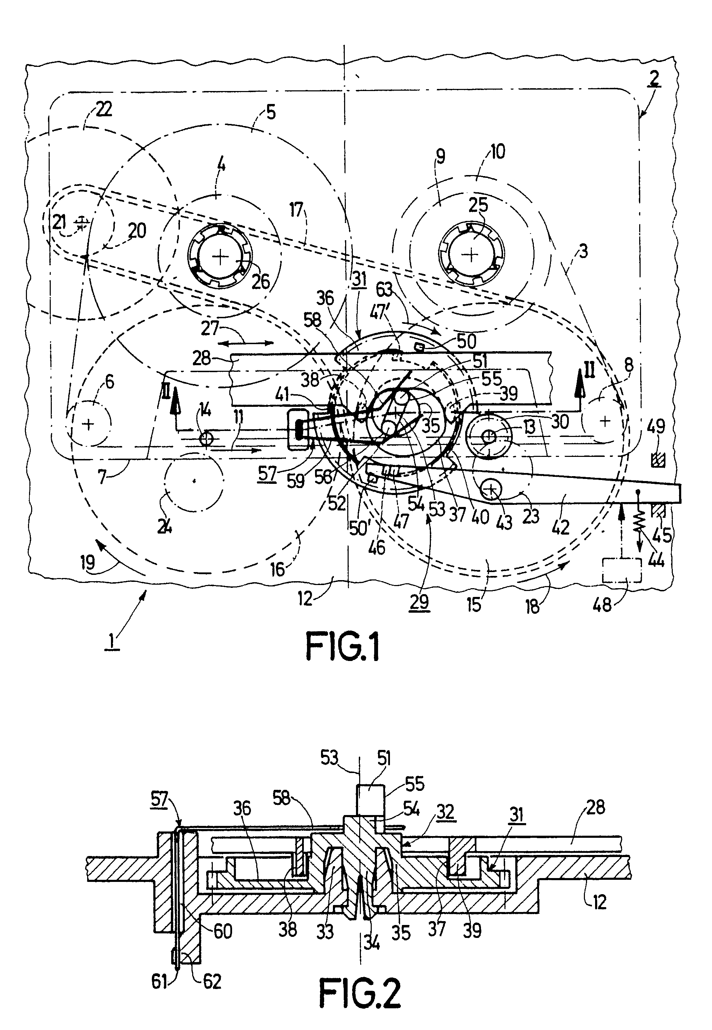

Die Erfindung wird in folgenden anhand eines in der Zeichnung dargestellten Ausführungsbeispieles, auf das dieselbe jedoch nicht beschränkt sein soll, näher beschrieben. Die Fig.1 zeigt in Draufsicht einen Teil eines Aufzeichnungs- und Wiedergabegerätes für einen in einer Kassette untergebrachten Aufzeichnungsträger, das einen Servomechanismus zum Verstellen eines zwischen zwei Betriebslagen verstellbaren, zum Umschalten zwischen zwei Betriebsarten des Gerätes vorgesehenen Schiebers aufweist. Die Fig.2 zeigt in einem Schnitt nach der Linie II-II in Fig.1 in einem gegenüber der Fig.1 größeren Maßstab einen Teil des Servomechanismus des Gerätes gemäß Fig.1.

Die Fig.1 zeigt einen im Zusammenhang mit der vorliegenden Erfindung wesentlichen Teil eines Gerätes 1 zum Aufzeichnen und Wiedergeben von Tonsignalen auf einem in einer in das Gerät einsetzbaren Kassette 2 untergebrachten bandförmigen Aufzeichnungsträger 3, der im folgenden kurz als Magnetband 3 bezeichnet ist. Die Kassette 2 ist mit strichpunktierten Linien schematisch dargestellt. Das Magnetband 3 verläuft in der Kassette 2 von einem auf einem Rücklauf-Wickelkern 4 aufgewickelten Bandwickel 5 über eine Bandführung 6 entlang einer vorderen langen Kassettenschmalseite 7 und einer weiteren Bandführung 8 zu einem auf einem Vorlauf-Wickelkern 9 aufgewickelten Bandwickel 10. In der Kassettenschmalseite 7 sind in bekannter Weise Öffnungen vorgesehen, durch die hindurch nicht dargestellte Magnetköpfe zum Aufzeichnen und Wiedergeben und zum Löschen von Tonsignalen mit dem Magnetband 3 in Abtastverbindung bringbar sind. Das Gerät 1 ist als sogenanntes Reverse-Gerät ausgebildet, mit dem das Aufzeichnen und Wiedergeben von Tonsignalen sowohl in eienr Vorlauf-Betriebsart, in der das Magnetband 3 in einer mit einem Pfeil 11 angegebenen Richtung an dem nicht dargestellten Magnetkopf zum Aufzeichnen und Wiedergeben mit konstanter Geschwindigkeit entlang bewegt wird, als auch in einer Rücklauf-Betriebsart, in der das Magnetband 3 entgegen der mit dem Pfeil 11 angegebenen Richtung an dem Magnetkopf zum Aufzeichnen und Wiedergeben mit derselben konstanten Geschwindigkeit entlang bewegt wird, erfolgen kann.

Das Gerät 1 weist ein im wesentlichen plattenförmiges, aus Kunststoff bestehendes Chassis 12 auf, an der eine rotierend antreibbare Vorlauf-Antriebswelle 13 und eine rotierend antreibbare Rücklauf-Antriebswelle 14 drehbar gelagert sind. Beide Antriebswellen 13 und 14 sind je mit einer Schwungscheibe 15 und 16 drehfest verbunden, die mit einer um beide Schwungscheiben 15 und 16 in entgegengesetztem Windungssinn teilweise herumgeschlungenen Pese 17 in entgegengesetzten Drehrichtungen mit konstanter Drehzahl antreibbar sind, und zwar die Schwungscheibe 15 in Richtung des Pfeiles 18 und die Schwungscheibe 16 in Richtung des Pfeiles 19. Zum Antreiben der Pese 17 ist dieselbe um ein Pesenrad 20 geführt, das auf einer Motorwelle 21 eines an dem Chassis 12 befestigten, mit konstanter Drehzahl angetriebenen Motors 22 sitzt. Die beiden Antriebswellen 13 und 14 dienen zum Antreiben des Magnetbandes 3 in der Vorlauf-Betriebsart und in der Rücklauf-Betriebsart, wobei in der Vorlauf-Betriebsart das Magnetband 3 mit einer schematisch mit einer strichpunktierten Linie dargestellten verstellbaren ersten Andruckrolle 23 an die Vorlauf-Antriebswelle 13 angedrückt wird und wobei in der Rücklauf-Betriebsart das Magnetband 3 mit einer schematisch mit einer strichpunktierten Linie dargestellten verstellbaren zweiten Andruckrolle 24 an die Rücklauf-Antriebswelle 14 angedrückt wird. Die Fig.1 zeigt schematisch die Situation, wie sie in der Vorlauf-Betriebsart vorliegt, wobei die zweite Andruckrolle 24 von der Rücklauf-Antriebswelle 14 weg verstellt ist.

Zum Antreiben des Vorlauf-Wickelkernes 9 und des Rücklauf-Wickelkernes 4 weist das Gerät 1 einen Vorlauf-Wickeldorn 25 und einen Rücklauf-Wickeldorn 26 auf, die beide an dem Chassis 12 drehbar gelagert sind. Der Vorlauf-Wickeldorn 25 ist in bekannter Weise in der Vorlauf-Betriebsart von der Vorlauf-Antriebswelle 13 her über ein zwischen diese beiden einschaltbares, nicht dargestelltes erstes Zwischengetriebe und der Rücklauf-Wickeldorn 26 ist in bekannter Weise in der Rücklauf-Betriebsart von der Rücklauf-Antriebswelle 14 her über ein zwischen diese beiden einschaltbares, nicht dargestelltes zweites Zwischengetriebe antreibbar.

Zum Verstellen der Andruckrollen 23 und 24 und der beiden Zwischengetriebe zum Antreiben der Wickeldorne 25 und 26 entsprechend der Vorlauf-Betriebsart bzw. der Rücklauf-Betriebsart weist das Gerät 1 einen in Richtung des Doppelpfeiles 27 an dem Chassis 12 mit nicht dargestellten Stift-Schlitz-Ver bindungen verschiebbar geführten Schieber 28 auf. Der Schieber 28 ist zwischen zwei Betriebspositionen verschiebbar, und zwar zwischen der in Fig.1 dargestellten Betriebsposition, in der er über nicht dargestellte Verstellmechanismen die erste Andruckrolle 23 an die Vorlauf-Antriebswelle 13 angedrückt hält und das erste Zwischengetriebe zwischen die Vorlauf-Antriebswelle 13 und den Vorlauf-Wickeldorn 25 einschaltet, und einer gegenüber der in Fig.1 dargestellten Betriebsposition nach links verschobenen Betriebsposition, in der er über nicht dargestellte Verstellmechanismen die zweite Andruckrolle 24 an die Rücklauf-Antriebswelle 14 angedrückt hält und das zweite Zwischengetriebe zwischen die Rücklauf-Antriebswelle 14 und den Rücklauf-Wik-keldorn 26 einschaltet.

In dem Gerät 1 ist zum Verstellen des Schiebers 28 ein Servomechanismus 29 vorgesehen. Der Servomechanismus 29 weist ein von dem Motor 22 antreibbares, aus Kunststoff bestehendes erstes Zahnrad 30 auf, das drehfest auf die Vorlauf-Antriebswelle 13 aufgesetzt ist und auf diese Weise nach erfolgtem Einschalten des Gerätes von dem Motor 22 über die Motorwelle 21, das Pesenrad 20, die Pese 17, die Schwungscheibe 15 und die Vorlauf-Antriebswelle 13 ständig angetrieben wird. Weiters weist der Servomechanismus 29 ein mit dem ersten Zahnrad 30 in Eingriff bringbares, ebenfalls aus Kunststoff bestehendes zweites Zahnrad 31 auf, von dem her der Schieber 28 verstellbar ist. Das zweite Zahnrad 31 ist mit einem Lager 32 an dem Chassis 12 drehbar gelagert. Das Lager 32 besteht hiebei, wie aus Fig.2 ersichtlich ist, aus einer vom Chassis 12 abstehenden Lagerhülse 33 und aus einem an dem zweiten Zahnrad 31 vorgesehenen Lagerzapfen 34 sowie aus einem an dem zweiten Zahnrad 31 vorgesehenen Lagertopf 35, wobei der Lagerzapfen 34 in die Lagerhülse 33 eingeführt ist und der Lagertopf 35 über die Lagerhülse 33 gestülpt ist. Der Lagerzapfen 34 ist an seinem freien Ende geschlitzt und hakenförmig ausgebildet, so daß die hakenförmigen Enden das Chassis 12 federnd hintergreifen und auf diese Weise das zweite Zahnrad 31 am Chassis 12 festgehalten ist. Zum Verstellen des Schiebers 28 weist das zweite Zahnrad 31 eine von einer Seitenfläche 36 desselben abstehende Verstellnocke 37 auf, mit der zwei von dem Schieber 28 seitlich zum Chassis 12 hin abstehende, als Nockenfolger dienende Fortsätze 38 und 39 zusammenwirken.

Das zweite Zahnrad 31 weist in seinem Umfangsbereich zwei zahnfreie Abschnitte 40 und 41 auf, die einander diametral gegenüberliegen und die in zwei Ruhelagen des zweiten Zahnrades 31 dem ersten Zahnrad 30 gegenüberliegen, wie dies für eine Ruhelage aus Fig.1 ersichtlich ist. In jeder Ruhelage ist das zweite Zahnrad 31 mit einem zwischen einer in Fig.1 dargestellten Blockierlage und einer nicht dargestellten Freigabelage verstellbaren Blockierhebel 42 blockierbar. Der Blockierhebel 42 ist um eine Achse 43 verschwenkbar und mit einer Feder 44 in seiner durch einen vom Chassis 12 abstehenden Anschlag 45 festgelegten Blockierlage gehalten. In seiner Blockierlage befindet sich ein von ihm abstehender Blockierlappen 46 im Verstellweg eines von zwei von der Seitenfläche 36 des zweiten Zahnrades 31 abstehenden Blockierfortsätzen 47 bzw. 47', dies je nach Ruhelage des zweiten Zahnrades 31. Der Blockierhebel 42 ist, wie in Fig.1 schematisch mit strichpunktierten Linien angedeutet ist, von einer Taste 48 zum Umschalten zwischen der Vorlauf-Betriebsart und der Rücklauf-Betriebsart in seine Freigabelage verschwenkbar, in der er sich an einem weiteren vom Chassis 12 abstehenden Anschlag 49 abstützt. In der Freigabelage ist der von dem Blockierhebel 42 abstehende Blockierlappen 46 aus dem Verstellweg der Blockierfortsätze 47 bzw. 47' verstellt, so daß, wie nachfolgend noch beschrieben ist, das zweite Zahnrad 31 aus seiner jeweiligen Ruhelage verdreht werden kann. In der Freigabelage ragt der von dem Blockierhebel 42 abstehende Blockierlappen 46 in den Verstellweg eines von zwei von der Seitenfläche 36 des zweiten Zahnrades 31 abstehenden weiteren Blockierfortsätzen 50 bzw. 50', mit denen ein ständiges Rotieren des zweiten Zahnrades 31 bei in seiner Freigabelage gehaltenem Blockierhebel 42 unterbunden wird.

Das zweite Zahnrad 31 weist nunmehr zwei von der Seitenfläche 36 desselben abstehende, hier mit der einen Teil der Seitenfläche bildenden Bodenfläche des Lagertopfes 35 verbundene zylindrische Stifte 51 und 52 auf, die bezüglich der Achse 53 des zweiten Zahnrades 31 diametral angeordnet sind und die mit einem Steg 54 zur Erhöhung der Festigkeit verbunden sind. Mantelflächen 55 und 56 der zylindrischen Stifte 51 und 52 bilden je eine gegenüber der Achse 53 des zweiten Zahnrades 31 versetzt angeordnete Angriffsfläche, die in der Ruhelage des zweiten Zahnrades 31 von einer Feder 57 belastet sind, mit der nach einer Verstellung des Blockierhebels 42 aus seiner in Fig.1 dargestellten Blockierlage in seine Freigabelage das zweite Zahnrad 31 zum Ineingriffbringen mit dem ersten Zahnrad 30 in Drehung versetzbar ist. Die Feder 57 ist hiebei einfach durch eine zweiarmige Biegefeder gebildet, die als Drahtfeder ausgebildet ist, deren beide Arme 58 und 59 unmittelbar an den Mantelflächen 55 und 56 der Stifte 51 und 52 angreifen. Die beiden Arme 58 und 59 der Biegefeder 57 sind rechtwinkelig abgebogen ausgebildet und mit ihren abgebogenen Abschnitten in einen Befestigungsschlitz 60 am Chassis 12 eingeschoben, wobei der die beiden Arme 58 und 59 verbindende Steg 61 der Biegefeder 57 hinter einem Haltefortsatz 62 des Chassis 12 eingeschnappt ist, wodurch die Biegefeder 57 am Chassis 12 fixiert ist.

Im folgenden ist die Funktionsweise des Servomechanismus 29 beschrieben. Wie bereits erwähnt, ist in Fig.1 jene Situation dargestellt, in der im Gerät 1 die Vorlauf-Betriebsart eingeschaltet ist. Um nun im Gerät 1 anstelle der Vorlauf-Betriebsart die Rücklauf-Betriebsart einzuschalten, wird die Taste 48 betätigt. Dadurch wird der Blockierhebel 42 in seine Freigabelage verschwenkt, wobei der Blockierlappen 46 aus dem Verstellweg des Blockierfortsatzes 47 verstellt wird. Durch die von den beiden Federarmen 58 und 59 auf die Stifte 51 und 52 ausgeübten Federkräfte wird daraufhin das zweite Zahnrad 31 aus seiner Ruhelage in Richtung des Pfeiles 63 in Drehung versetzt, wobei das zweite Zahnrad 31 mit dem vom Motor 22 her ständig angetriebenen ersten Zahnrad 30 in Eingriff kommt. Hierauf wird das zweite Zahnrad 31 von ersten Zahnrad 30 angetrieben, so daß die Verstellkraft für die Verstellung des zweiten Zahnrades 31 und des Schiebers 28 und der vom Schieber 28 zu verstellenden Geräteteile vom Motor 22 her aufgebracht wird. Durch das Verdrehen des zweiten Zahnrades 31 wird die an demselben vorgesehene Verstellnocke 37 mitverdreht, durch die über die Fortsätze 38 und 39 der Schieber 28 gemäß Fig.1 nach links verschoben wird. Dabei wird die erste Andruckrolle 23 und das erste Zwischengetriebe zwischen der Vorlauf-Antriebswelle 13 und dem Vorlauf-Wickeldorn 25 außer Funktion gesetzt und die zweite Andruckrolle 24 und das zweite Zwischengetriebe zwischen der Rücklauf-Antriebswelle 14 und dem Rücklauf-Wickeldorn 26 in Funktion gebracht. Bevor das zweite Zahnrad 31 seine zweite Ruhelage erreicht hat, kommt das erste Zahnrad 30 außer Eingriff von dem zweiten Zahnrad 31, wobei aber der Schieber 28 bereits seine zweite Betriebsposition einnimmt. Danach wird das zweite Zahnrad 31 von der Biegefeder 57 weitergedreht, wobei der Federarm 58 dann am Stift 52 und der Federarm 59 am Stift 51 angreift. Das Weiterdrehen des zweiten Zahnrades 31 erfolgt solange, bis der weitere Blockierfortsatz 50 am zweiten Zahnrad 31 gegen den Blockierlappen 46 an dem noch in seiner Freigabelage gehaltenen Blockierhebel 42 stößt. Wenn danach der Blockierhebel 42 durch die Feder 44 wieder in seine Ruhelage verstellt wird, was nach dem Loslassen der Taste 48 erfolgt, wird das zweite Zahnrad 31 von der Biegefeder 57 geringfügig weitergedreht, bis der Blockierfortsatz 47' am Blockierlappen 46 anliegt, wonach das zweite Zahnrad 31 seine zweite Ruhelage einnimmt, in der das zweite Zahnrad 31 gegenüber der ersten Ruhelage um 180° verdreht ist. In dieser Situation ist über den Schieber 28 die Rücklauf-Betriebsart im Gerät 1 eingeschaltet.

Dadurch, daß an dem zweiten Zahnrad zwei diametral gegenüberliegende Angriffsflächen vorgesehen sind, die beide je von einem Federarm einer zweiarmigen Biegefeder belastet sind, heben sich die an sich auf das Lager des zweiten Zahnrades von den Federarmen der ausgeübten Belastungen gegenseitig im wesentlichen auf. Hiedurch tritt praktisch keine Belastung des Lagers auf und folglich wird eine besonders kleine Lagerreibung erstens zwischen dem Lagerzapfen und der Lagerhülse und zweitens zwischen der Lagerhülse und dem Lagertopf erreicht, was insbesondere in vorliegendem Fall, wo das Chassis und das zweite Zahnrad aus Kunststoff bestehen, von Wichtigkeit ist. Aufgrund der kleinen Lagerreibung wird nämlich vorteilhafterweise eine leichtgängige Verdrehbarkeit des zweiten Zahnrades erreicht, so daß das zweite Zahnrad mit Sicherheit von der zweiarmigen Biegefeder verdreht werden kann, wie dies zum Ineingriffbringen des zweiten Zahnrades mit dem ersten Zahnrad und nach dem Außereingrifftreten des zweiten Zahnrades von dem ersten Zahnrad der Fall ist. Durch die kleine Lagerreibung wird zusätzlich ein geringer Verschleiß des Lagers des zweiten Zahnrades erreicht. Die Verwendung einer zweiarmigen Biegefeder ist im Hinblick auf eine möglichst gleich große Federbelastung der beiden Angriffsflächen an dem zweiten Zahnrad sowie eine einfache Federausbildung und eine einfache Federmontage vorteilhaft. Die beiden Stifte, deren Mantelflächen die Angriffsflächen für die zweiarmige Biegefeder bilden, weisen beim vorliegenden Ausführungsbeispiel den gleichen Abstand von der Achse des zweiten Zahnrades auf, was hinsichtlich einer möglichst gleich großen Federbelastung der beiden Angriffsflächen vorteilhaft, aber nicht unbedingt erforderlich ist.

## Ansprüche

1. Aufzeichnungs- und/oder Wiedergabegerät mit mindestens einem zum Verstellen mindestens eines Geräteteiles vorgesehenen Servomechanismus, der ein von einem Motor antreibbares erstes Zahnrad und ein mit dem ersten Zahnrad in Eingriff bringbares, mit einem Lager drehbar gelagertes zweites Zahnrad aufweist, von dem her der Geräteteil verstellbar ist und das in seinem Umfangsbereich mindestens einen zahnfreien Abschnitt, der in einer Ruhelage des zweiten Zahnrades, in der dasselbe mit einem zwischen einer Blockierlage und einer Freigabelage verstellbaren Blockierteil blokkierbar ist, dem ersten Zahnrad gegenüberliegt, und eine von einer Seitenfläche desselben abstehende, gegenüber der Achse desselben versetzt angeordnete Angriffsfläche aufweist, die in der Ruhelage des zweiten Zahnrades von einer Feder belastet ist, mit der nach einer Verstellung des Blockierteiles aus seiner Blockierlage in seine Freigabelage das zweite Zahnrad zum Ineingriffbringen mit dem ersten Zahnrad in Drehung versetzbar ist, dadurch gekennzeichnet, daß das zweite Zahnrad zusätzlich eine von der Seitenfläche desselben abstehende zweite Angriffsfläche aufweist und die beiden Angriffsflächen bezüglich der Achse des zweiten Zahnrades diametral angeordnet sind und daß in der Ruhelage des zweiten Zahnrades die zweite Angriffsfläche ebenfalls von einer Feder belastet ist, mit der nach einer Verstellung des Blockierteiles aus seiner Blockierlage in seine Freigabelage das zweite Zahnrad zum Ineingriffbringen mit dem ersten Zahnrad in Drehung versetzbar ist.

2. Gerät nach Anspruch 1, dadurch gekennzeichnet, daß die beiden Angriffsflächen von einer einzigen Feder belastet sind.

3. Gerät nach Anspruch 2, dadurch gekennzeichnet, daß die Feder durch eine zweiarmige Biegefeder gebildet ist, deren beide Arme unmittelbar an den Angriffsflächen angreifen.

EP 0 391 481 A2

FIG.1

FIG.2